# EUROPEAN PATENT SPECIFICATION

(11) **EP 4 246 021 B1**
(45) Date of publication and mention of the grant of the patent: **18.06.2025**
(21) Application number: 21893533.6
(22) Date of filing: 10.09.2021
(51) Int. Cl.: F16K 1/00, F16K 1/32, F16K 1/36, F16K 1/42, F16K 1/46, F16K 27/02, F16K 31/06, B05B 1/02, B05B 1/30, B05B 15/65, B05B 15/16, B01L 3/02, B01L 3/00

(54) **LIQUID OUTLET STRUCTURE COMPRISING A SEALING VALVE**
FLÜSSIGKEITSAUSLASSSTRUKTUR MIT DICHTUNGSVENTIL
STRUCTURE DE SORTIE DE LIQUIDE COMPRENANT UNE SOUPAPE D'ÉTANCHÉITÉ

(30) Priority: 23.11.2020 CN 202011317080
(43) Date of publication of application: 20.09.2023
(73) Proprietor: Shijiazhuang Hipro Biotechnology Co., Ltd., Shijiazhuang, Hebei 050000 (CN)
(72) Inventor: HAO, Shushun, Shijiazhuang, Hebei 050000 (CN); SUI, Yanjun, Shijiazhuang, Hebei 050000 (CN); CHEN, Lizhu, Shijiazhuang, Hebei 050000 (CN); XING, Shiyuan, Shijiazhuang, Hebei 050000 (CN); YAO, Zhaohui, Shijiazhuang, Hebei 050000 (CN)
(74) Representative: Isarpatent
(86) International application number: PCT/CN2021/117654
(87) International publication number: WO 2022/105382

(56) References cited:
- EP-A1- 3 249 269
- WO-A1-94/18011
- CN-A- 102 072 327
- CN-A- 104 169 008
- CN-A- 110 325 772
- CN-A- 112 431 930
- DE-B3- 102017 212 726
- US-A1- 2015 050 186
- US-A1- 2016 263 594
- US-A1- 2018 022 537

## Description

### TECHNICAL FIELD

The disclosure relates to the technical field of liquid outlet structure of reagent kits, and in particular, to a sealing valve, and a liquid outlet structure comprising same.

### BACKGROUND

Kits are common laboratory supplies used to preserve reaction reagents. In the prior art, in a laboratory, pipettes or syringes are required to draw the reagents out the kits before injecting the reagents into an experimental instrument. When drawing different reagents, it is required to replace the pipette tip or clean the syringe and the needle of the syringe, which is cumbersome and time-consuming. And, the amount of reagent drawn out is easily affected by the operator's operation method, which is not conducive to conversion to automated instruments for operation.

EP 3 249 269 A1 provides a flow control valve that can effectively reduce the generation of noise due to fluctuations in the pressure or a refrigerant separation phenomenon that may occur while a refrigerant passes through the valve orifice. DE 10 2017 212726 B3 provides a metering valve and a jet pump unit for controlling a gaseous medium, in particular hydrogen, for example for use in vehicles with fuel cell drive. US 2015/050186 Al provides a valve with a magnetic plunger moving into an opening position and a closing position.

### SUMMARY

### TECHNICAL PROBLEMS

The purpose of this application is to provide a sealing valve that can control the opening and closing of the nozzle easily and has good sealing performance, and can prevent liquid crystallization at the nozzle. At the same time, it provides a liquid outlet structure that is simple and compact, can take liquid accurately and realize automation easily.

### TECHNICAL SOLUTIONS

The present invention is set out by the appended claims.

According to the present invention, a liquid outlet structure includes the sealing valve, a spray pipe and a nozzle provided at an end portion of the spray pipe, as defined by independent claim 1.

The sealing valve includes a sealing valve body. The sealing valve body is provided with a cylindrical valve hole and a bottom end of the cylindrical valve hole is provided with a frustum hole. The frustum hole is arranged coaxially with the cylindrical valve hole, and a first bottom end of the frustum hole is in communication with the bottom end of the cylindrical valve hole.

The spray pipe includes a spray pipe body, a spray hole formed in an axial direction of the spray pipe body, and a magnet bar provided in the spray hole. A plurality of blocking strips extending axially along the spray hole are uniformly arranged on an inner wall of the spray hole, and one end of each of the plurality of blocking strips is provided with a shoulder close to a first end of the spray pipe body that extends towards a center of the spray hole. The magnet bar moves along an axial direction of the spray hole in a space defined by a plurality of shoulders and the plurality of blocking strips. The magnet bar is configured to touch pressure the sealing valve to block the nozzle at a second end of the spray pipe body where no shoulder is provided.

The nozzle includes an annular sleeve, an end plate provided at one end of the annular sleeve, a nozzle pipe provided at a center of the end plate, and a conical nozzle opening provided at an end portion of the nozzle pipe such to prevent liquid from adhering to a lower end of the nozzle. An annular blocking flange surrounding a periphery of the nozzle pipe is further provided at the end plate. A liquid channel communicable with an interior of the annular sleeve is formed in the nozzle pipe and the conical nozzle opening. An annular groove is defined between the nozzle pipe and the annular blocking flange.

The annular sleeve is in threaded connection or clamped connection with the spray pipe body and the sealing valve is provided in the annular sleeve.

Advantageous embodiments are provided in dependent claims.

### ADVANTAGEOUS EFFECTS OF THE DISCLOSURE

The cylindrical valve hole in the sealing valve body of this disclosure is used for passing liquid, and the sealing groove at the top end of the cylindrical valve hole can contain a magnet bar, which is conducive to sealing the cylindrical valve hole. The frustum hole and cylindrical liquid storage tank at the bottom end of the cylindrical valve hole can store a portion of liquid that is used for soaking the conical nozzle opening and preventing the liquid inside the nozzle from rapidly evaporating and crystallizing. The nozzle and spray pipe are sealed by the sealing valve to prevent air leakage at the connection between the nozzle and spray pipe.

The spray pipe is in clamped connection or threaded connection with the nozzle, which facilitates disassembly and replacement.

The shoulders in the spray hole of the spray pipe body are used to prevent the magnet bar from blocking the liquid inlet end, and a gap is formed between adjacent blocking strips for liquid flow. When the liquid flows along the gaps, it will not be blocked by the magnet bar. When the magnet bar moves to the other end, it can block the nozzle at the end portion of the spray pipe. The reciprocating movement of the magnet bar in the spray hole realizes the opening and closing of the spray pipe.

The conical nozzle opening of the nozzle is designed as a conical surface, which can prevent liquid from adhering to the lower end of the nozzle forming hanging droplets. The annular blocking flange and annular groove around the nozzle pipe can prevent the slender nozzle pipe from being damaged by external forces. The annular groove can also clamp the sealing cover of a container when installing the container for receiving liquid reagents flowing out of the nozzle to prevent the sealing cover from being disengaged easily. It is easy for the liquid outlet structure provided in this disclosure to be installed and has good liquid outlet effect.

The structure of the device provided in this disclosure is ingenious and simple, which is conducive to achieving automation and miniaturization.

### BRIEF DESCRIPTION OF THE DRAWINGS

Fig. 1 is a schematic sectional view of the sealing valve in embodiment 1;
Fig. 2 is a schematic sectional view of the sealing valve in embodiment 2;
Fig. 3 is a schematic sectional view of the sealing valve in embodiment 3;
Fig. 4 is a schematic sectional view of the liquid outlet structure in embodiment 4; and
Fig. 5 is a schematic sectional view of the liquid outlet structure in embodiment 5.

### DETAILED DESCRIPTION OF ILLUSTRATIVE EMBODIMENTS

In the following description, a clear and complete description of the technical solution in the embodiments of this application will be provided referring to the drawings. It should be appreciated, however, that the concepts disclosed herein can be embodied in a wide variety of specific contexts. The specific embodiments discussed are merely illustrative, and do not limit the scope of the claims.

### Embodiment 1.

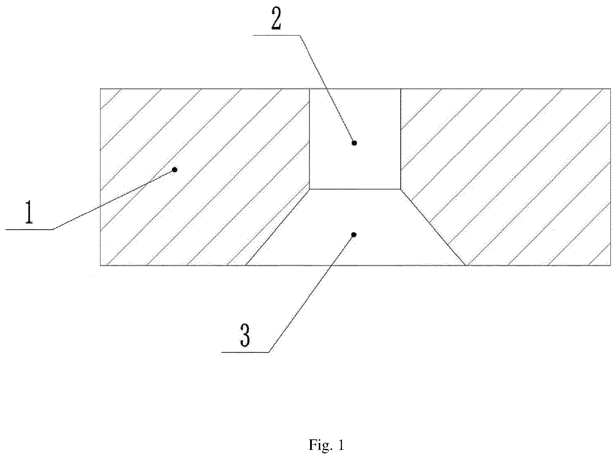

As shown in Fig. 1, a sealing valve includes a sealing valve body 1. The sealing valve body 1 is provided with a cylindrical valve hole 2 and a bottom end of the cylindrical valve hole 2 is provided with a frustum hole 3. The frustum hole 3 is arranged coaxially with the cylindrical valve hole 2, and a first bottom end of the frustum hole 3 is in communication with the bottom end of the cylindrical valve hole 2. A shape of the sealing valve body 1 is cylindrical. The material of the sealing valve body 1 is selected from an elastic material, such as rubber, preferably silica gel. The frustum hole 3 is provided with a first bottom end and a second bottom end, and a diameter of the second bottom end of the frustum hole 3 is greater than that of the first bottom end of the frustum hole 3.

### Embodiment 2.

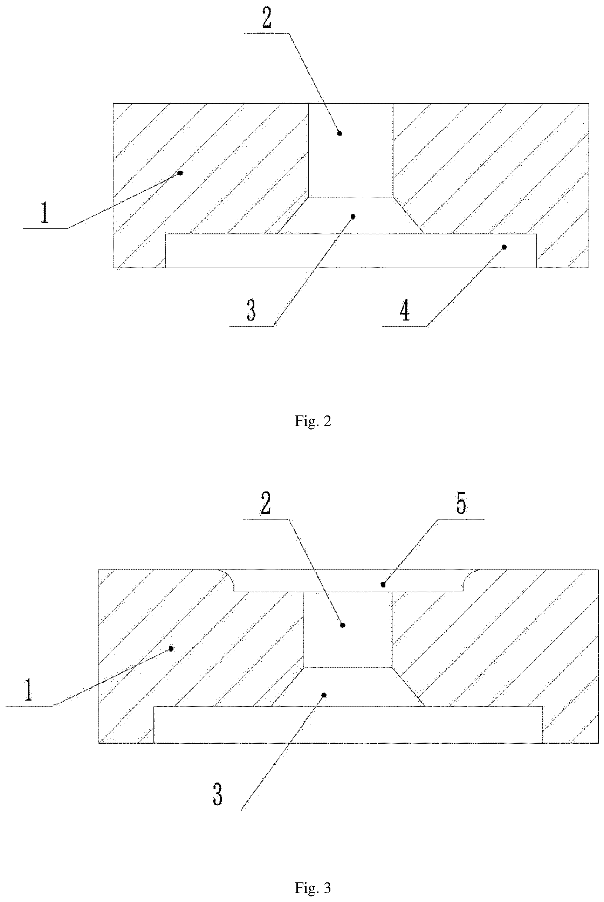

The sealing valve provided in embodiment 2 differs from embodiment 1 in that: in embodiment 2 as shown in Fig. 2, the sealing valve further includes a cylindrical liquid storage tank 4 communicable with the second bottom end of the frustum hole 3. The cylindrical liquid storage tank 4 is arranged coaxially with the frustum hole 3, and a diameter of the cylindrical liquid storage tank 4 is greater than a diameter of the second bottom end of the frustum hole 3.

### Embodiment 3.

The sealing valve provided in embodiment 3 differs from embodiment 1 or embodiment 2 in that: in embodiment 3 as shown in Fig. 3, the sealing valve further includes a sealing groove 5 provided at a top end of the cylindrical valve hole 2, and the connection between the sealing groove 5 and a top end of the sealing valve body 1 is transited via an arc surface, that is, the inner side wall of the sealing groove 5 is in a circular arc shape.

### Embodiment 4.

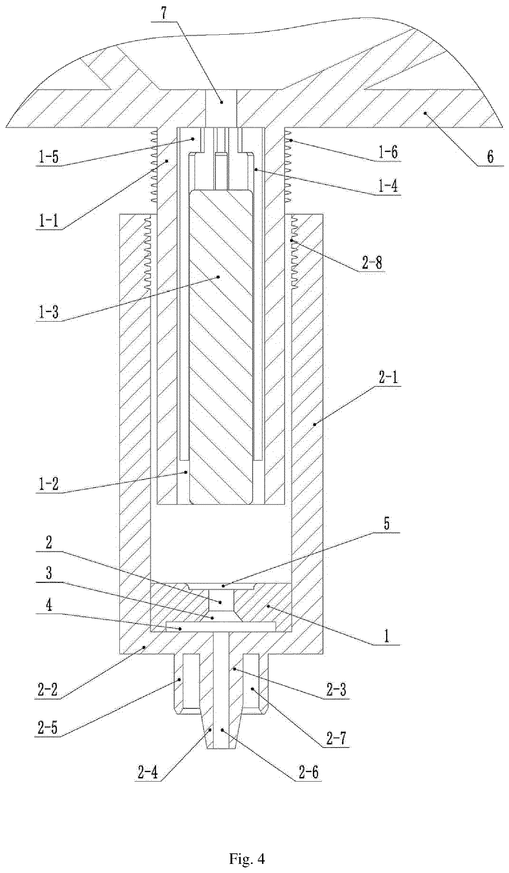

As shown in Fig. 4, a liquid outlet structure includes a spray pipe and a nozzle provided at an end portion of the spray pipe.

The spray pipe includes a spray pipe body 1-1, a spray hole 1-2 formed in an axial direction of the spray pipe body 1-1, and a magnet bar 1-3 provided in the spray hole 1-2. A plurality of blocking strips 1-4 extending axially along the spray hole 1-2 are uniformly arranged on an inner wall of the spray hole 1-2, and one end of each of the plurality of blocking strips 1-4 is provided with a shoulder 1-5 that extends towards a center of the spray hole 1-2. The magnet bar 1-3 moves along an axial direction of the spray hole 1-2 in a space defined by a plurality of shoulders 1-5 and the plurality of blocking strips 1-4.

The spray pipe body 1-1 is fixedly connected to the kit 6, and the spray hole 1-2 in the spray pipe body 1-1 is in communication with a liquid outlet hole 7 of the kit 6. One end of the spray pipe body 1-1 close to the shoulder 1-5 is a liquid inlet end, and the liquid reagent in the kit 6 flows into the spray hole 1-2 of the spray pipe body 1-1 from the liquid inlet end.

The circular section diameter defined by the plurality of shoulders 1-5 is smaller than the section diameter of the magnet bar 1-3, and the circular section diameter defined by the plurality of blocking strips 1-4 is greater than the section diameter of the magnet bar 1-3. Specifically, a first cylindrical space with a horizontal cross-section is defined by the plurality of shoulders 1-5. Similarly, a second cylindrical space with a horizontal cross-section is defined by the plurality of blocking strips 1-4. The shoulders 1-5 can prevent the magnet bar 1-3 from entering the first cylindrical space defined by the plurality of shoulders 1-5 and moving towards the liquid outlet hole 7 of the kit 6 to avoid the magnet bar 1-3 blocking the liquid outlet hole 7. A gap is formed between adjacent blocking strips 1-4, and liquid reagents can flow in the spray hole 1-2 through the gap without being blocked by the magnet bar.

The nozzle includes an annular sleeve 2-1, an end plate 2-2 provided at one end of the annular sleeve 2-1, a nozzle pipe 2-3 provided at a center of the end plate 2-2, and a conical nozzle opening 2-4 provided at an end portion of the nozzle pipe 2-3. An annular blocking flange 2-5 surrounding a periphery of the nozzle pipe 2-3 is further provided at the end plate 2-2. A liquid channel 2-6 communicable with an interior of the annular sleeve 2-1 is formed in the nozzle pipe 2-3 and the conical nozzle opening 2-4. Namely, the liquid channel 2-6 penetrates through the end plate 2-2, the nozzle pipe 2-3 and the conical nozzle opening 2-4. An annular groove 2-7 is defined between the nozzle pipe 2-3 and the annular blocking flange 2-5.

The conical nozzle opening 2-4 of the nozzle is designed as a conical surface, which can prevent liquid from adhering to the lower end of the nozzle forming hanging droplets. The shape of the nozzle pipe 2-3 is conical frustum or cylindrical. The annular blocking flange 2-5 and annular groove 2-7 around the nozzle pipe 2-3 can prevent the slender nozzle pipe 2-3 from being damaged by external forces. The annular groove 2-7 can also clamp the sealing cover of a container when installing the container for receiving liquid reagents flowing out of the nozzle to prevent the sealing cover from being disengaged easily.

The annular sleeve 2-1 is in threaded connection with the spray pipe body 1-1. Specifically, the spray pipe body 1-1 is provided with a first end close to the plurality of shoulders 1-5, and an outer side wall of the first end is provided with an external thread 1-6, and an opening end of the annular sleeve 2-1 is provided with an internal thread 2-8 matching the external thread 1-6. As shown in Fig. 4, one end of the annular sleeve 2-1 is provided with the end plate 2-2, and the other end opposite to the end plate 2-2 is the opening end of the annular sleeve 2-1. The internal thread 2-8 provided in the inner side of the opening end are connected to the external thread 1-6 to fix the annular sleeve 2-1 and the spray pipe body 1-1.

The sealing valve is located in the annular sleeve 2-1. The specific structure of the sealing valve may be any one of the embodiment 1 to embodiment 3. The placement direction of the sealing valve is that the first bottom end of the frustum hole 3 is close to the spray pipe, and the second bottom end of the frustum hole 3 is close to the nozzle. The sealing valve body 1 of the sealing valve is in interference fit with the annular sleeve 2-1 to achieve sealing and prevent liquid from leaking out of the slot. The cylindrical valve hole 2 connects the spray hole 1-2 of the spray pipe to the liquid channel 2-6 of the nozzle. There is no shoulder at the connection end of the spray pipe body 1-1 and the sealing valve, and the magnet bar 1-3 can touch pressure the sealing valve. The sealing valve is made of a silica gel material, and has elasticity. After being squeezed by the magnet bar 1-3, the cylindrical valve hole 2 is blocked to achieve the sealing effect, thereby blocking liquid reagents from entering the nozzle, and achieving the effect of stopping liquid outlet.

When there is a sealing groove 5 in the sealing valve, the connection between the sealing groove 5 and the top end of the sealing valve body 1 is transited via an arc surface to guide the magnet bar 1-3 into the sealing groove 5. The cylindrical valve hole 2 is arranged at the center of the sealing groove 5, which facilitates the alignment and positioning of the magnet bar 1-3 and the cylindrical valve hole 2, and avoids liquid leakage caused by the magnet bar 1-3 deviating from the cylindrical valve hole 2.

When there is a cylindrical liquid storage tank 4 in the sealing valve, the cylindrical liquid storage tank 4 can store a portion of liquid reagents that is used for soaking the nozzle and preventing the liquid reagents inside the conical nozzle opening 2-4 from rapidly evaporating and crystallizing to block the nozzle.

The shape of the magnet bar 1-3 is cylindrical. The number of the plurality of blocking strips 1-4 is at least three, and the plurality of blocking strips 1-4 are uniformly distributed on the inner wall of the spray hole 1-2. The number of the plurality of blocking strips 1-4 is six as shown in Fig. 4. Too few blocking strips 1-4 (e.g. one or two) may cause the magnet bar 1-3 to stick to the inner wall of the spray hole 1-2 during movement, while too many blocking strips 1-4 may make the gap between two adjacent blocking strips too narrow, both of which may increase the flow resistance of liquid reagent. The number of the blocking strips 1-4 needs to be reasonably adjusted according to the sizes of the spray pipe body 1-1 and the magnet bar 1-3.

In order to achieve the movement of the magnet bar 1-3 in the spray hole 1-2, an electromagnet may be sleeved at the liquid inlet end of the spray pipe body 1-1, and a permanent magnet ring sleeved at the annular connecting part 1-7 of the spray pipe body 1-1. The polarity of the permanent magnet ring is opposite to that of the magnet bar 1-3, and the magnet bar 1-3 are attracted to block the nozzle leading to liquid outlet stopping. When discharging liquid, the electromagnet is electrified. The magnetic force of the electromagnet is greater than that of the permanent magnet ring, and the magnet bar 1-3 is attracted to the liquid inlet end of the spray pipe body 1-1. The plurality of shoulders 1-5 are contacted with the magnet bar 1-3, and the liquid reagent enters the nozzle through the gap for discharging.

### Embodiment 5.

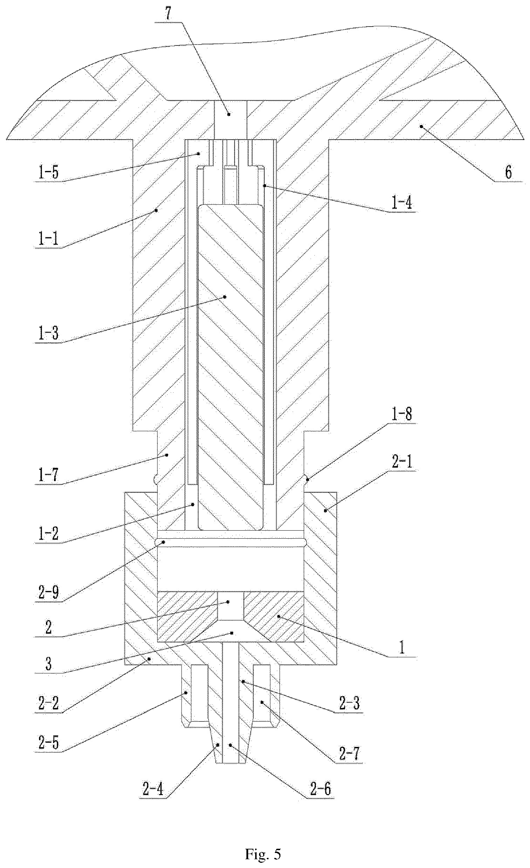

The liquid outlet structure provided in embodiment 5 differs from embodiment 4 in that: in embodiment 5 as shown in Fig. 5, the annular sleeve 2-1 is in clamped connection with the spray pipe body 1-1. Specifically, the spray pipe body 1-1 is provided with a second end away from the plurality of shoulders 1-5, and the second end is provided with an annular connecting part 1-7. An outer side wall of the annular connecting part 1-7 is provided with an annular convex 1-8, and an opening end of the annular sleeve 2-1 is provided with an annular concave 2-9 matching the annular convex 1-8. The nozzle cooperates with the annular convex 1-8 of the spray pipe body 1-1, and the annular connecting part 1-7 is inserted into the annular sleeve 2-1, which is conducive to easy installation and not easy to disengage. The liquid reagent passes through the liquid outlet hole 7 of the kit, the spray pipe, and the cylindrical valve hole 2 of the sealing valve for outflowing from the liquid channel 2-6 in the nozzle.

## Claims

1. A liquid outlet structure comprising: a sealing valve, a spray pipe and a nozzle provided at an end portion of the spray pipe;
the sealing valve comprises a sealing valve body (1) provided with a cylindrical valve hole (2); wherein a bottom end of the cylindrical valve hole (2) is provided with a frustum hole (3) that is arranged coaxially with the cylindrical valve hole (2), and a first end of the frustum hole (3) is in communication with the bottom end of the cylindrical valve hole (2);
the spray pipe comprises a spray pipe body (1-1), a spray hole (1-2) formed in an axial direction of the spray pipe body (1-1), and a magnet bar (1-3) provided in the spray hole (1-2); a plurality of blocking strips (1-4) extending axially along the spray hole (1-2) are uniformly arranged on an inner wall of the spray hole (1-2), and one end of each of the plurality of blocking strips (1-4) is provided with a shoulder (1-5) close to a first end of the spray pipe body (1-1) that extends towards a center of the spray hole (1-2); and the magnet bar (1-3) is movable along an axial direction of the spray hole (1-2) in a space defined by a plurality of shoulders (1-5) and the plurality of blocking strips (1-4), the magnet bar (1-3) is configured to touch pressure the sealing valve to block the nozzle at a second end of the spray pipe body (1-1) where no shoulder is provided;
the nozzle comprises an annular sleeve (2-1), an end plate (2-2) provided at one end of the annular sleeve (2-1), a nozzle pipe (2-3) provided at a center of the end plate (2-2), and a conical nozzle opening (2-4) provided at an end portion of the nozzle pipe (2-3) such to prevent liquid from adhering to a lower end of the nozzle; an annular blocking flange (2-5) surrounding a periphery of the nozzle pipe (2-3) is further provided at the end plate (2-2); a liquid channel (2-6) communicable with an interior of the annular sleeve (2-1) is formed in the nozzle pipe (2-3) and the conical nozzle opening (2-4); and an annular groove (2-7) is defined between the nozzle pipe (2-3) and the annular blocking flange (2-5); and
the annular sleeve (2-1) is in threaded connection or clamped connection with the spray pipe body (1-1); and the sealing valve is provided in the annular sleeve (2-1).

2. The liquid outlet structure according to claim 1, wherein an outer side wall of the first end of the spray pipe body (1-1) is provided with an external thread (1-6), and an opening end of the annular sleeve (2-1) is provided with an internal thread (2-8) matching the external thread (1-6).

3. The liquid outlet structure according to claim 1, wherein the second end of the spray pipe body (1-1) is away from the plurality of shoulders (1-5), and the second end is provided with an annular connecting part (1-7); an outer side wall of the annular connecting part (1-7) is provided with an annular convex (1-8), and an opening end of the annular sleeve (2-1) is provided with an annular concave (2-9) matching the annular convex (1-8).

4. The liquid outlet structure according to any one of claims 1 to 3, wherein a shape of the magnet bar (1-3) is cylindrical.

5. The liquid outlet structure according to claim 1, wherein a quantity of the plurality of blocking strips (1-4) is at least three.

6. The liquid outlet structure according to claim 5, wherein a circular section diameter defined by the plurality of shoulders (1-5) is smaller than a section diameter of the magnet bar (1-3), and a circular section diameter defined by the plurality of blocking strips (1-4) is greater than the section diameter of the magnet bar (1-3).

7. The liquid outlet structure according to claim 1, wherein the sealing valve further comprises a cylindrical liquid storage tank (4) communicable with a second end of the frustum hole (3); the cylindrical liquid storage tank (4) is arranged coaxially with the frustum hole (3), and a diameter of the cylindrical liquid storage tank (4) is greater than a diameter of the second end of the frustum hole (3); and the diameter of the second end of the frustum hole (3) is greater than that of the first end of the frustum hole (3).

8. The liquid outlet structure according to claim 1 or 7, wherein the sealing valve further comprises a sealing groove (5) provided at a top end of the cylindrical valve hole (2), and a connection between the sealing groove (5) and a top end of the sealing valve body (1) is transited via an arc surface such that an inner side wall of the sealing groove (5) is in a circular arc shape.

9. The liquid outlet structure according to claim 1, wherein a shape of the sealing valve body (1) is cylindrical.

## Patentansprüche

1. Flüssigkeitsauslassstruktur, umfassend: ein Dichtungsventil, ein Sprührohr und eine Düse, die an einem Endabschnitt des Sprührohrs bereitgestellt ist;
wobei das Dichtungsventil einen Dichtungsventilkörper (1) umfasst, der mit einem zylindrischen Ventilloch (2) versehen ist; wobei ein unteres Ende des zylindrischen Ventillochs (2) mit einem kegelstumpfförmigen Loch (3) versehen ist, das koaxial zu dem zylindrischen Ventilloch (2) angeordnet ist, und ein erstes Ende des kegelstumpfförmigen Lochs (3) in Verbindung mit dem unteren Ende des zylindrischen Ventillochs (2) steht;
das Sprührohr einen Sprührohrkörper (1-1), ein Sprühloch (1-2), das in einer axialen Richtung des Sprührohrkörpers (1-1) gebildet ist, und einen Magnetstab (1-3), der in dem Sprühloch (1-2) bereitgestellt ist, umfasst; mehrere Blockierstreifen (1-4), die sich axial entlang des Sprühlochs (1-2) erstrecken, gleichmäßig an einer Innenwand des Sprühlochs (1-2) angeordnet sind, und ein Ende jedes der mehreren Blockierstreifen (1-4) mit einer Schulter (1-5) nahe einem ersten Ende des Sprührohrkörpers (1-1) versehen ist, die sich in Richtung einer Mitte des Sprühlochs (1-2) erstreckt; und der Magnetstab (1-3) entlang einer axialen Richtung des Sprühlochs (1-2) in einem Raum beweglich ist, der von mehreren Schultern (1-5) und den mehreren Blockierstreifen (1-4) definiert ist, wobei der Magnetstab (1-3) dazu eingerichtet ist, das Dichtungsventil mit Druck zu berühren, um die Düse an einem zweiten Ende des Sprührohrkörpers (1-1), wo keine Schulter bereitgestellt ist, zu blockieren;
die Düse eine ringförmige Hülse (2-1), eine Endplatte (2-2), die an einem Ende der ringförmigen Hülse (2-1) bereitgestellt ist, ein Düsenrohr (2-3), das in einer Mitte der Endplatte (2-2) bereitgestellt ist, und eine konische Düsenöffnung (2-4), die an einem Endabschnitt des Düsenrohrs (2-3) so bereitgestellt ist, dass verhindert wird, dass Flüssigkeit an einem unteren Ende der Düse anhaftet, umfasst; ein ringförmiger Blockierflansch (2-5), der einen Umfang des Düsenrohrs (2-3) umgibt, des Weiteren an der Endplatte (2-2) bereitgestellt ist; ein Flüssigkeitskanal (2-6), der mit einem Inneren der ringförmigen Hülse (2-1) in Verbindung bringbar ist, in dem Düsenrohr (2-3) und der konischen Düsenöffnung (2-4) gebildet ist; und eine ringförmige Nut (2-7) zwischen dem Düsenrohr (2-3) und dem ringförmigen Blockierflansch (2-5) definiert ist; und
die ringförmige Hülse (2-1) mit dem Spritzrohrkörper (1-1) in Schraub- oder Klemmverbindung steht; und das Dichtungsventil in der ringförmige Hülse (2-1) bereitgestellt ist.

2. Flüssigkeitsauslassstruktur nach Anspruch 1, wobei eine äußere Seitenwand des ersten Endes des Sprührohrkörpers (1-1) mit einem Außengewinde (1-6) versehen ist und ein Öffnungsende der ringförmigen Hülse (2-1) mit einem Innengewinde (2-8) versehen ist, das mit dem Außengewinde (1-6) zusammenpasst.

3. Flüssigkeitsauslassstruktur nach Anspruch 1, wobei das zweite Ende des Sprührohrkörpers (1-1) von den mehreren Schultern (1-5) entfernt liegt und das zweite Ende mit einem ringförmigen Verbindungsteil (1-7) versehen ist; eine äußere Seitenwand des ringförmigen Verbindungsteils (1-7) mit einer ringförmigen Konvexität (1-8) versehen ist und ein Öffnungsende der ringförmigen Hülse (2-1) mit einer ringförmigen Konkavität (2-9) versehen ist, die mit der ringförmigen Konvexität (1-8) zusammenpasst.

4. Flüssigkeitsauslassstruktur nach einem der Ansprüche 1 bis 3, wobei eine Form des Magnetstabs (1-3) zylindrisch ist.

5. Flüssigkeitsauslassstruktur nach Anspruch 1, wobei eine Anzahl der mehreren Blockierstreifen (1-4) mindestens drei beträgt.

6. Flüssigkeitsauslassstruktur nach Anspruch 5, wobei ein kreisförmiger Querschnittsdurchmesser, der von den mehreren Schultern (1-5) definiert ist, kleiner ist als ein Querschnittsdurchmesser des Magnetstabs (1-3), und ein kreisförmiger Querschnittsdurchmesser, der von den mehreren Blockierstreifen (1-4) definiert ist, größer ist als der Querschnittsdurchmesser des Magnetstabs (1-3).

7. Flüssigkeitsauslassstruktur nach Anspruch 1, wobei das Dichtungsventil des Weiteren einen zylindrischen Flüssigkeitsspeichertank (4) umfasst, der mit einem zweiten Ende des kegelstumpfförmigen Lochs (3) in Verbindung bringbar ist; der zylindrische Flüssigkeitsspeichertank (4) koaxial zu dem kegelstumpfförmigen Loch (3) angeordnet ist und ein Durchmesser des zylindrischen Flüssigkeitsspeichertanks (4) größer ist als ein Durchmesser des zweiten Endes des kegelstumpfförmigen Lochs (3); und der Durchmesser des zweiten Endes des kegelstumpfförmigen Lochs (3) größer ist als der des ersten Endes des kegelstumpfförmigen Lochs (3).

8. Flüssigkeitsauslassstruktur nach Anspruch 1 oder 7, wobei das Dichtungsventil des Weiteren eine Dichtungsnut (5) umfasst, die an einem oberen Ende des zylindrischen Ventillochs (2) bereitgestellt ist, und eine Verbindung zwischen der Dichtungsnut (5) und einem oberen Ende des Dichtungsventilkörpers (1) über eine Bogenfläche dergestalt hergestellt ist, dass eine innere Seitenwand der Dichtungsnut (5) eine Kreisbogenform beschreibt.

9. Flüssigkeitsauslassstruktur nach Anspruch 1, wobei eine Form des Dichtungsventilkörpers (1) zylindrisch ist.

## Revendications

1. Structure de sortie de liquide, comprenant : une soupape d'étanchéité, un tuyau de pulvérisation et une buse agencée sur une portion d'extrémité du tuyau de pulvérisation ;
dans laquelle la soupape d'étanchéité comprend un corps de soupape d'étanchéité (1) pourvu d'un trou de soupape cylindrique (2) ; une extrémité inférieure du trou de soupape cylindrique (2) étant pourvue d'un trou tronconique (3) qui est agencé coaxialement au trou de soupape cylindrique (2), et une première extrémité du trou tronconique (3) étant en communication avec l'extrémité inférieure du trou de soupape cylindrique (2) ;
le tuyau de pulvérisation comprend un corps de tuyau de pulvérisation (1-1), un trou de pulvérisation (1-2) formé dans une direction axiale du corps de tuyau de pulvérisation (1-1), et un barreau d'aimant (1-3) agencé dans le trou de pulvérisation (1-2) ; plusieurs bandes de blocage (1-4) s'étendant axialement selon le trou de pulvérisation (1-2) sont agencées uniformément sur une paroi intérieure du trou de pulvérisation (1-2), et une extrémité des plusieurs bandes de blocage (1-4) est munie d'un épaulement (1-5) près d'une première extrémité du corps de tuyau de pulvérisation (1-1) qui s'étend vers un centre du trou de pulvérisation (1-2) ; et le barreau d'aimant (1-3) est mobile selon une direction axiale du trou de pulvérisation (1-2) dans un espace défini par plusieurs épaulements (1-5) et les plusieurs bandes de blocage (1-4), le barreau d'aimant (1-3) est configuré pour exercer une pression tactile sur la soupape d'étanchéité afin de bloquer la buse sur une seconde extrémité du corps de tuyau de pulvérisation (1-1) lorsqu'aucun épaulement n'est fourni ;
la buse comprend une douille annulaire (2-1), une plaque d'extrémité (2-2) agencée sur une extrémité de la douille annulaire (2-1), un tuyau de buse (2-3) agencé sur un centre de la plaque d'extrémité (2-2), et une ouverture de buse conique (2-4) agencée sur une portion d'extrémité du tuyau de buse (2-3) de telle manière à empêcher du liquide d'adhérer à une extrémité inférieure de la buse ; une collerette de blocage annulaire (2-5) entourant une périphérie du tuyau de buse (2-3) est en outre agencée sur la plaque d'extrémité (2-2) ; un canal de liquide (2-6) pouvant être mis en communication avec un intérieur de la douille annulaire (2-1) est formé dans le tuyau de buse (2-3) et l'ouverture de buse conique (2-4) ; et une gorge annulaire (2-7) est définie entre le tuyau de buse (2-3) et la collerette de blocage annulaire (2-5) ; et
la douille annulaire (2-1) est en liaison filetée ou en liaison serrée avec le corps de tuyau de pulvérisation (1-1) ; et la soupape d'étanchéité est agencée dans la douille annulaire (2-1).

2. Structure de sortie de liquide selon la revendication 1, dans laquelle une paroi latérale extérieure de la première extrémité du corps de tuyau de pulvérisation (1-1) est pourvue d'un filetage extérieur (1-6), et une extrémité d'ouverture de la douille annulaire (2-1) est pourvue d'un filetage intérieur (2-8) correspondant au filetage extérieur (1-6).

3. Structure de sortie de liquide selon la revendication 1, dans laquelle la seconde extrémité du corps de tuyau de pulvérisation (1-1) est éloignée des plusieurs 'épaulements (1-5), et la seconde extrémité est pourvue d'une partie de liaison annulaire (1-7) ; une paroi latérale extérieure de la partie de liaison annulaire (1-7) est pourvue d'uné convexité annulaire (1-8), et une extrémité d'ouverture de la douille annulaire (2-1) est pourvue d'une concavité annulaire (2-9) correspondant au bossage convexe annulaire (1-8).

4. Structure de sortie de liquide selon l'une quelconque des revendications 1 à 3, dans laquelle une forme du barreau d'aimant (1-3) est cylindrique.

5. Structure de sortie de liquide selon la revendication 1, dans laquelle une quantité des plusieurs bandes de blocage (1-4) est égale à au moins trois.

6. Structure de sortie de liquide selon la revendication 5, dans laquelle un diamètre de section circulaire défini par les plusieurs épaulements (1-5) est inférieur à un diamètre de section du barreau d'aimant (1-3), et un diamètre de section circulaire défini par les plusieurs bandes de blocage (1-4) est supérieur au diamètre de section du barreau d'aimant (1-3).

7. Structure de sortie de liquide selon la revendication 1, dans laquelle la soupape d'étanchéité comprend en outre un réservoir de stockage de liquide cylindrique (4) pouvant être mis en communication avec une seconde extrémité du trou tronconique (3) ; le réservoir de stockage de liquide cylindrique (4) est agencé coaxialement au trou tronconique (3), et un diamètre du réservoir de stockage de liquide cylindrique (4) est supérieur à un diamètre de la seconde extrémité du trou tronconique (3) ; et le diamètre de la seconde extrémité du trou tronconique (3) est supérieur à celui de la première extrémité du trou tronconique (3).

8. Structure de sortie de liquide selon la revendication 1 ou 7, dans laquelle la soupape d'étanchéité comprend en outre une rainure d'étanchéité (5) agencée sur une extrémité supérieure du trou de soupape cylindrique (2), et une liaison entre la rainure d'étanchéité (5) et une extrémité supérieure du corps de soupape d'étanchéité (1) est franchie via une surface d'arc de telle sorte qu'une paroi latérale intérieure de la rainure d'étanchéité (5) a une forme d'arc circulaire.

9. Structure de sortie de liquide selon la revendication 1, dans laquelle une forme du corps de soupape d'étanchéité (1) est cylindrique.
